(19) **Europäisches Patentamt / European Patent Office / Office européen des brevets**

(11) **EP 2 371 643 A1**

(12) **EUROPEAN PATENT APPLICATION**
published in accordance with Art. 153(4) EPC

(43) Date of publication:
**05.10.2011 Bulletin 2011/40**

(51) Int Cl.:
***B60T 13/74*** *(2006.01)*

(21) Application number: **09830248.2**

(22) Date of filing: **08.09.2009**

(86) International application number:
**PCT/JP2009/065659**

(87) International publication number:
**WO 2010/064480 (10.06.2010 Gazette 2010/23)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.12.2008 JP 2008311653**

(71) Applicant: **Nissan Motor Co., Ltd.
Kanagawa 221-0023 (JP)**

(72) Inventor: **ISHIZUKA, Motoi
Atsugi-shi, Kanagawa 243-0123 (JP)**

(74) Representative: **Grünecker, Kinkeldey, Stockmair & Schwanhäusser
Anwaltssozietät
Leopoldstrasse 4
80802 München (DE)**

(54) **BRAKE DEVICE AND METHOD OF CONTROLLING BRAKE DEVICE**

(57) [TASK] It is an object to provide a brake device and a method of controlling the brake device, capable of suppressing an inrush current during a startup period of an electric booster.

[MEANS TO SOLVE] In a brake device having an input rod, a piston for pressurizing a fluid pressure in a master cylinder responsively to a displacement of the input rod, and an electric booster for pushing the piston against a spring bias of a return spring of the piston and for assisting a movement of the piston in a direction for pressurizing of the fluid pressure, an input-rod displacement detection device is provided for detecting the displacement of the input rod. Also provided is an electric-booster controller configured to start up the electric booster, while applying an assisting force to the piston to push the piston against a biasing force, which forces the piston in a direction for reducing of the fluid pressure in the master cylinder, upon detecting that the input rod has been displaced a predetermined displacement at the time when a driver's brake-pedal operation starts.

**FIG.3**

**Description**

## TECHNICAL FIELD

The present invention relates to a brake device and a method of controlling the brake device.

## BACKGROUND ART

Conventionally, there have been proposed and developed brake devices in which an electric booster is provided for magnifying a driver's brake-pedal input and for outputting the magnified input to a master cylinder. One such electric-booster equipped brake device has been disclosed in Patent document 1.

Patent document 1: Japanese Patent Provisional Publication No. 2007-112426 (A)

## DISCLOSURE OF THE INVENTION

## TASK SOLVED BY THE INVENTION

In the electric-booster equipped brake device, when a drive motor of the electric booster starts to rotate during a starting period of driver's brake-pedal operation, an inertia (startup load) is exerted on a motion converter of the electric booster due to a return-spring force acting on a primary piston. Thus, there is a problem of an inrush current due to which a large electric current is temporarily consumed in order for the drive motor of the electric booster to produce a driving force exceeding the startup load during the startup.
It is, therefore, in view of the previously-described disadvantages of the prior art, to provide a brake device and a method of controlling the brake device, which is configured to suppress an inrush current during a startup of an electric booster.

## MEANS TO SOLVE THE TASK

In order to accomplish the aforementioned and other objects, in the present invention, upon detecting that an input rod has been displaced a predetermined displacement at the time when a driver's brake-pedal operation starts, an electric booster is started up, while applying an assisting force to a primary piston to push the piston against a biasing force, which forces the piston in the direction of reducing a fluid pressure in a master cylinder.

## EFFECTS OF THE INVENTION

Therefore, according to the brake device and the method of controlling the brake device of the present invention, it is possible to reduce a startup load of an electric booster, thus suppressing an inrush current during a startup.

## BRIEF DESCRIPTION OF THE DRAWINGS

[FIG. 1] Fig. 1 is a general system diagram of a brake device of the first embodiment in a brake-pedal release state in which a primary piston is kept in an abutted-engagement with a movable member.
[FIG. 2] Fig. 2 is a flowchart illustrating inrush current suppression control processing, executed within a master-cylinder controller of the first embodiment.
[FIG. 3] Fig. 3 is a general system diagram of the brake device of the first embodiment in a brake-pedal depressed state in which the primary piston is spaced apart from the movable member owing to a brake-pedal depression.
[FIG. 4] Fig. 4 is an explanatory view illustrating a method of setting a desired deceleration rate for another braking function.
[FIG. 5] Fig. 5 is a desired-deceleration-rate correction factor calculation map in which the desired deceleration rate is varied with respect to a time rate of change in input-rod displacement.
[FIG. 6] Figs. 6A-6C are time charts illustrating the relationship among a driver's brake-pedal operation, a braking-period electric current consumed, and a terminal voltage of a drive motor when a battery (a main electric power source) is normally operating.
[FIG. 7] Figs. 7A-7C are time charts illustrating the relationship among a driver's brake-pedal operation, a braking-period electric current consumed, and a terminal voltage of a drive motor in the presence of a failure of a battery (a main electric power source).

[FIG. 8] Figs. 8A-8C are time charts illustrating the relationship among a driver's brake-pedal operation, a braking-period electric current consumed, and a terminal voltage of a drive motor, for explaining an inrush current suppression action of the brake device of the first embodiment.

[FIG. 9] Fig. 9 is a general system diagram of a brake device of the second embodiment.

[FIG. 10] Fig. 10 is a flowchart illustrating inrush current suppression control processing, executed within a master-cylinder controller of the second embodiment.

[FIG. 11] Fig. 11 is a general system diagram of a brake device of the third embodiment.

[FIG. 12] Fig. 12 is a flowchart illustrating inrush current suppression control processing, executed within a master-cylinder controller of the third embodiment.

## DESCRIPTION OF THE PREFERRED EMBODIMENTS

The brake device of the present invention is hereunder explained in detail in reference to the drawings, and then comes the first, second, and third embodiments, in that order.

## FIRST EMBODIMENT

First of all, the construction of the brake device of the first embodiment is described.

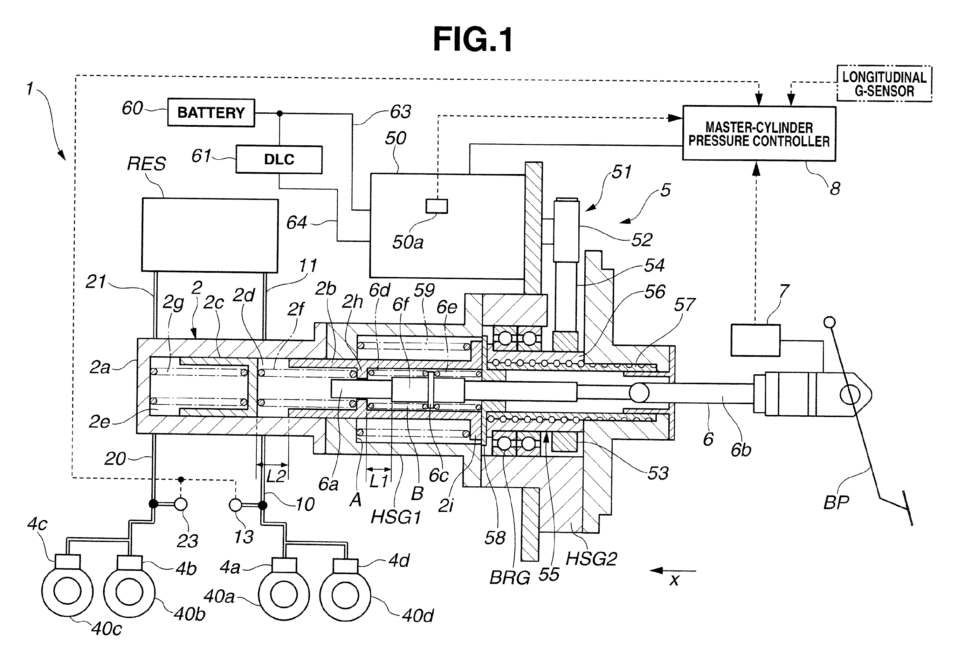

Fig. 1 is the general system diagram of the brake device 1 of the first embodiment. Brake device 1 of the first embodiment is mounted on a motor-driven electric vehicle. Brake device 1 has a dual brake system master cylinder (a dual master cylinder) 2, a reservoir tank RES, wheel cylinders 4a-4d installed on respective road wheels, an electric booster (a master-cylinder pressure control mechanism) 5 installed on the dual master cylinder 2 and an input rod 6 connected to the dual master cylinder, a brake manipulated variable detection device (an input-rod displacement detection device) 7, an electric-booster controller (a master-cylinder pressure controller) 8 configured to control the electric booster 5, a battery 60 serving as a main electric power source, an electric double layer capacitor (DLC) 61 serving as a back-up electric power source.

Input rod 6 is configured to move (advance or retreat) together with a brake pedal BP, for adjusting a fluid pressure in the dual master cylinder 2 (hereinafter is referred to as "master-cylinder pressure Pmc"). Electric booster 5 and electric-booster controller 8 are provided for adjusting the master-cylinder pressure Pmc by moving a primary piston 2b of dual master cylinder 2 in the axial direction of the master cylinder 2a.

In the following explanation, assume that the axial direction of the master cylinder 2a is defined as an "x-axis" direction, and the side of brake pedal BP installed is defined as a negative direction. Dual master cylinder 2 is a so-called tandem type in which the primary piston 2b and a secondary piston 2c are both installed in the master cylinder 2a. A primary fluid-pressure chamber 2d (serving as a first fluid-pressure chamber) is defined by the inner peripheral surface of master cylinder 2a, the wall surface of primary piston 2b, facing in the positive x-axis direction, and the wall surface of secondary piston 2c, facing in the negative x-axis direction. A secondary fluid-pressure chamber 2e (serving as a second fluid-pressure chamber) is defined by the inner peripheral surface of master cylinder 2a and the wall surface of secondary piston 2c, facing in the positive x-axis direction.

Primary fluid-pressure chamber 2d is connected to a primary circuit 10, whereas secondary fluid-pressure chamber 2e is connected to a secondary circuit 20. The volume of primary fluid-pressure chamber 2d varies depending on a displacement of each of primary piston 2b and secondary piston 2c, each moving in the master cylinder 2a. The volume of secondary fluid-pressure chamber 2e varies depending on a displacement of secondary piston 2c moving in the master cylinder 2a. A return spring 2f is installed in the primary fluid-pressure chamber 2d for biasing the primary piston 2b in the negative x-axis direction. On the other hand, a return spring 2g is installed in the secondary fluid-pressure chamber 2e for biasing the secondary piston 2c in the negative x-axis direction.

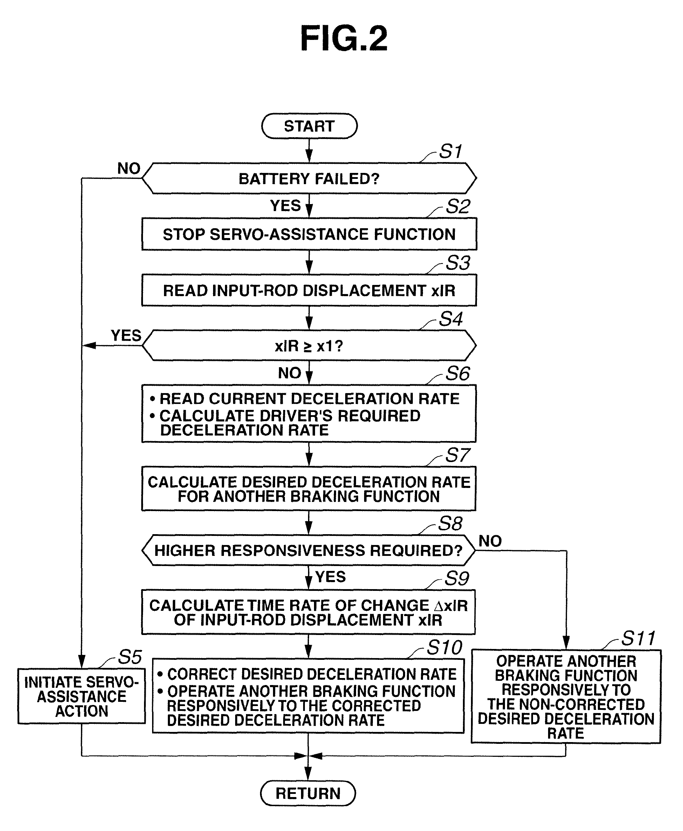

A primary fluid-pressure sensor 13 is attached to the primary circuit 10, whereas a secondary fluid-pressure sensor 23 is attached to the secondary circuit 20. Primary fluid-pressure sensor 13 is provided for detecting a fluid pressure in the primary fluid-pressure chamber 2d, whereas secondary fluid-pressure sensor 23 is provided for detecting a fluid pressure in the secondary fluid-pressure chamber 2e. Information about fluid pressures from these fluid-pressure sensors is sent to the electric-booster controller 8. The controller is configured to calculate a current deceleration rate (see step S6 shown in the flowchart of Fig. 2) on the basis of the fluid-pressure information generated from the fluid-pressure sensors and regarded as to be substantially equivalent to master-cylinder pressure Pmc.

One end 6a of input rod 6, facing in the positive x-axis direction, is protruded into the primary fluid-pressure chamber 2d in a manner so as to penetrate a central bore formed in the partition wall 2h of primary piston 2b. The space between the one end 6a of input rod 6 and the partition wall 2h of primary piston 2b is sealed by means of a seal member (not shown) in a fluid-tight fashion. The one end 6a is installed in a manner so as to be slidable in the x-axis direction with regard to the partition wall 2h. On the other hand, the other end 6b of input rod 6, facing in the negative x-axis direction, is connected to the brake pedal BP. When the driver depresses the brake pedal BP, input rod 6 moves in the positive x-axis direction. Conversely when the brakes are released by the driver and the brake pedal BP returns backward, the input rod 6 moves in the negative x-axis direction.

Also, input rod 6 has a large-diameter portion 6f, which is formed integral with the input rod and whose diameter is dimensioned to be greater than the inside diameter of the central bore of the partition wall 2h of primary piston 2b and also dimensioned to be less than the outside diameter of a flanged portion 6c. In a brake inoperative state, a clearance (an axial clearance) L1 is provided between the end face of large-diameter 6f, facing in the positive x-axis direction, and the end face of partition wall2h, facing in the negative x-axis direction. During execution of regenerative cooperation brake control on hybrid vehicles or the like, by the utilization of this clearance L1, it is possible to reduce the brake fluid pressure of the hydraulic brake system by a pressure value corresponding to a regenerative brake force, by a displacement of primary piston 2b relative to input rod 6 in the negative x-axis direction. Also, by the provision of clearance L1, when a displacement of input rod 6 relative to primary piston 2b in the positive x-axis direction, which displacement corresponds to the clearance L1, occurs, the end face of large-diameter portion 6f, facing in the positive x-axis direction, is brought into abutted-engagement with the partition wall 2h. Thereafter, primary piston 2b, together with input rod 6 can move. As described later, in the brake device of the first embodiment, the partition wall 2h of primary piston 2b and the large-diameter portion 6f of input rod 6 cooperate with each other so as to function as an assisting force device (assisting force means) for applying an assisting force to the primary piston 2b through the input rod 6 whose position changes depending on a driver's brake-pedal operation, during an inrush current suppression control mode.

By movement of primary piston 2b together with input rod 6 in the positive x-axis direction, working fluid in primary fluid-pressure chamber 2d is pressurized, and then the pressurized working fluid is supplied to the primary circuit 10. Under the pressure of the pressurized working fluid in primary fluid-pressure chamber 2d, secondary piston 2c also moves in the positive x-axis direction. By the displacement of secondary piston 2c in the positive x-axis direction, working fluid in secondary fluid-pressure chamber 2e is pressurized, and then the pressurized working fluid is supplied to the secondary circuit 20. Also, in order to permit pressurizing action and pressure-reducing action of each of the pistons without collision-contact between the opposing ends of primary piston 2b and secondary piston 2c, in a brake inoperative state, a clearance L2 is provided between primary piston 2b and secondary piston 2c.

In this manner, the brake device is constructed such that the working fluid in primary fluid-pressure chamber 2d is pressurized by movement of input rod 6 together with the brake pedal BP. Hence, assuming that a drive motor 50 of electric booster 5 has stopped owing to a system failure, master-cylinder pressure Pmc can be risen by a driver's brake pedal operation, thereby ensuring a predetermined braking force. A reaction force, corresponding to the master-cylinder pressure Pmc, can be exerted on the brake pedal BP through the input rod 6, and transmitted to the driver as a brake-pedal reaction. This eliminates the necessity of a spring or the like, required to generate a brake-pedal reaction needed for another system, which does not use the construction as previously discussed. This contributes to the downsized and lightweight brake device, thus allowing excellent mountability of the brake device on the vehicle.

Brake manipulated variable detection device 7 is installed on the other end 6b of input rod 6 for detecting a driver's required braking force. Brake manipulated variable detection device 7 is a displacement sensor (a stroke sensor of brake pedal BP) for detecting a displacement xIR of the x-axis direction of input rod 6.

Reservoir RES has at least two fluid chambers, separated from each other by a partition wall (not shown). The fluid chambers are communicated with the respective fluid-pressure chambers 2d and 2e of dual master cylinder 2 through brake circuits 11 and 21.

Each of wheel cylinders 4a-4d has a cylinder, a piston, and a pad. The wheel cylinders are constructed such that the pistons move by working fluid supplied from the master cylinder 2a, and then the pads, connected to the respective pistons, are pressed on respective disk rotors 40a-40d. Disk rotors 40a-40d rotate together with the respective road wheels, and thus braking torques, acting on disk rotors 40a-40d, become braking forces acting between each of the road wheels and the road surface.

Electric booster 5 is configured to control a displacement of primary piston 2b, that is, master-cylinder pressure Pmc, responsively to a control command from the electric-booster controller 8. The electric booster has the drive motor 50, a speed reducer 51, and a rotary-to-translation motion converter 55. Electric-booster controller 8 is a processing circuitry configured to control the operation of drive motor 50, responsively to sensor signals from rotation-angle detectors (rotation-angle sensors 50a described later) attached to brake manipulated variable detection device 7 and drive motor 50.

Battery (the main electric power source) 60 is provided to store an electric power generated during a regenerative braking action of an electric motor (not shown) serving as a driving power source of the vehicle, and configured to supply the electric power to the drive motor 50 and all other electrical equipment.

Electric double layer capacitor (DLC) 61 (the back-up power source) is charged by electricity from the battery 60. The back-up power source is configured to supply electric power through a back-up power supply circuit 64 to the drive motor 50, when a power supply from a main electric power supply circuit 63 to drive motor 50 is disabled. From the viewpoint of emergency and mountability, the storage capacity of DLC 61 is set to be less than that of battery 60, and thus its electric power supply time is limited. Electric-booster controller 8 is configured to switch from a power supply from the main electric power supply circuit 63 to drive motor 50 to a power supply from the back-up power supply circuit 64 to the drive motor, in the presence of a failure in battery 60.

Subsequently to the above, the construction and operation of electric booster 5 are hereunder described. Drive motor 50 is a three-phase direct-current brushless motor, which is operated by an electric power, supplied based on a control command from electric-booster controller 8, so as to produce a desired torque.

Speed reducer 51 adopts a pulley-reduction type, in which an output rotation of drive motor 50 is speed-reduced by a pulley mechanism. Speed reducer 51 has a small-diameter drive pulley 52 installed on the output shaft of drive motor 50, a large-diameter driven pulley 53 installed on a ball-screw nut 56 of rotary-to-translation motion converter 55, and a belt 54 wound on both the drive pulley 52 and the driven pulley 53. Speed reducer 51 is configured to amplify a torque produced by drive motor 50 by an amplification ratio corresponding to a reduction ratio (a ratio of a radius of driven pulley 53 to a radius of drive pulley 52), and also to transmit the amplified torque to rotary-to-translation motion converter 55.

Rotary-to-translation motion converter 55 is configured to convert rotary power of drive motor 50 into translational power, and also to press the primary piston 2b by the translational power. In the first embodiment, as the power conversion (motion-conversion) mechanism, a ball-screw type is adopted. Rotary-to-translation converter 55 has the ball-screw nut 56, a ball-screw shaft 57, a movable member (pushing means) 58, a plurality of recirculating balls (not denoted by any reference sign), and a return spring (a biasing member) 59.

The end face of master cylinder 2a, facing in the negative x-axis direction, is fixedly connected to a first housing member HSG1, and also the end face of the first housing member HSG1, facing in the negative x-axis direction, is fixedly connected to a second housing member HSG2. Ball-screw nut 56 is rotatably provided on the inner periphery of a bearing BRG installed in the second housing member HSG2. Driven pulley 53 is press-fitted onto the outer periphery of ball-screw nut 56 on the negative x-axis direction. A substantially cylindrical-hollow ball-screw shaft (worm) 57 is installed on and screwed into the inner periphery of ball-screw nut 56. The recirculating balls are interposed in the space between the guide grooves cut in the inner periphery of ball-screw nut 56 and the worm teeth of ball-screw shaft 57.

The end face of ball-screw shaft 57, facing in the positive x-axis direction, is integrally connected to the movable member 58. The flanged portion 2i of primary piston 2b abuts with the end face of movable member 58, facing in the positive x-axis direction. Primary piston 2b is housed in the first housing member HSG1. The end of primary piston 2b on the side of the positive x-axis direction is protruded from the first housing member HSG1, and also slidably fitted into the inner periphery of master cylinder 2a.

Return spring 59 is installed in the first housing member HSG1 and arranged on the outer periphery of primary piston 2b. The end of return spring 59, facing in the positive x-axis direction, is seated on an inner face A of the inner peripheral section of the first housing member HSG1 on the side of the positive x-axis direction. On the other hand, the end of the return spring, facing in the negative x-axis direction is kept in abutted-engagement with the flanged portion 2i of primary piston 2b. Return spring 59 is disposed between the face A and the flanged portion 2i of primary piston 2b under preload such that the return spring is compressed in the x-axis direction, and that the movable member 58 and ball-screw shaft 57 are biased in the negative x-axis direction.

When the driven pulley 53 rotates, ball-screw nut 56 also rotates together with the driven pulley. Owing to rotary motion of ball-screw nut 56, translational motion of ball-screw shaft 57 in the x-axis direction occurs. A thrust, caused by translational motion of ball-screw shaft 57 in the positive x-axis direction, acts to force the primary piston 2b in the positive x-axis direction through the movable member 58. By the way, Fig. 1 shows an initial position of ball-screw shaft 57, in which the ball-screw shaft is displaced in a maximum-displacement position in the negative x-axis direction, in the brake inoperative state.

On the other hand, a spring force of return spring 59, acting in the opposite direction (that is, in the negative x-axis direction) against the thrust acting in the positive x-axis direction, is exerted on the ball-screw shaft 57. Thus, even when the drive motor 50 has stopped owing to a failure during braking, that is, under a state where master-cylinder pressure Pmc is pressurized by pushing the primary piston 2b in the positive x-axis direction, and thus return control of ball-screw shaft 57 becomes disabled, ball-screw shaft 57 can return back to its initial position by the spring force of return spring 59. As a result of this, the master-cylinder pressure Pmc lowers to a pressure value closer to zero fluid-pressure. Thus, it is possible to prevent a drag (a frictional drag) produced on the brake disk from occurring, and also avoiding an unstable vehicle behavior, which may occur owing to the frictional drag.

Also, a pair of springs 6d and 6e are installed in an annular space B defined between input rod 6 and primary piston 2b. The opposing axial ends of springs 6d and 6e are kept in abutted-engagement with the respective side faces of the flanged portion 6c of input rod 6. The other end of spring 6d is kept in abutted-engagement with the partition wall 2h, whereas the other end of spring 6e is kept in abutted-engagement with the movable member 58. The spring pair 6d, 6e functions to force both of primary piston 2b and input rod 6 toward a neutral position of relative displacement between the input rod and the primary piston, and also functions to hold both of input rod 6 and primary piston 2b at the neutral position (see Fig. 1) of relative displacement, in the brake inoperative state. Hence, when each of input rod 6 and primary piston 2b deviates from the neutral position of relative displacement in either one of the opposite axial directions, a biasing force acts to return the position of the input rod 6 relative to the primary piston 2b back to the neutral position by means of the spring pair 6d, 6e.

Additionally, drive motor 50 is provided with the rotation-angle sensor 50a such as a resolver. A positional signal (positional information) of the motor output shaft, detected by the rotation-angle sensor, is inputted into electric-booster controller 8. Electric-booster controller 8 is configured to calculate, based on the input positional signal, a rotation angle of drive motor 50, and also to calculate, based on the calculated rotation angle, a propelling amount of rotary-to-translation motion converter 55, that is, a displacement of primary piston 2b in the x-axis direction.

An amplification action for the thrust of input rod 6, performed by electric booster 5 and electric-booster controller 8, is hereunder described in detail. In the first embodiment, electric-booster controller 8 is also configured to control a displacement of the primary piston 2b responsively to a displacement of input rod 6, that is, responsively to a relative displacement $\Delta x$ between input rod 6 and primary piston 2b.

Electric booster 5 and electric-booster controller 8 are configured to displace the primary piston 2b responsively to a displacement of input rod 6, caused by a driver's brake-pedal operation. Hereby, the working fluid in primary fluid-pressure chamber 2d is pressurized by a thrust of primary piston 2b in addition to a thrust of input rod 6, and thus master-cylinder pressure Pmc is adjusted. That is, the thrust of input rod 6 is amplified. The amplification ratio (hereinafter referred to as "servo-assistance ratio $\alpha$") is determined based on a ratio between cross sections (hereinafter referred to as "pressure-receiving surface areas") of input rod 6 and primary piston 2b, taken along the direction perpendicular to the x-axis direction within the primary fluid-pressure chamber 2d, as follows.

Fluid-pressure adjustment for master-cylinder pressure Pmc is performed in accordance with a pressure-balance relationship represented by the following expression (1).

$$\mathrm{Pmc=(FIR+K{\times}\Delta x)/AIR=(FPP-K{\times}\Delta x)/APP} \quad \cdots (1)$$

Where respective elements (respective symbols) used in the pressure-balance expression (1) are as follows:

Pmc:     a fluid pressure in primary fluid-pressure chamber 2d (a master-cylinder pressure)
FIR:     a thrust of input rod 6
FPP:     a thrust of primary piston 2b
AIR:     a pressure-receiving surface area of input rod 6
APP:     a pressure-receiving surface area of primary piston 2b
K:       a spring constant of springs 6d, 6e
$\Delta x$:      a relative displacement between input rod 6 and primary piston 2b

In the first embodiment, the pressure-receiving surface area AIR of input rod 6 is set to be less than the pressure-receiving surface area APP of primary piston 2b.

The relative displacement $\Delta x$ is hereinafter defined as a difference between a displacement xPP of primary piston 2b and a displacement xIR of input rod 6, that is, $\Delta x = xPP - xIR$. Thus, the relative displacement $\Delta x$ becomes "0" at the neutral position, and becomes positive (a positive sign) when the primary piston 2b advances with respect to the input rod 6 (in the presence of a displacement of the primary piston in the positive x-axis direction), and becomes negative (a negative sign) when the primary piston 2b retreats with respect to the input rod 6 (in the presence of a displacement of the primary piston in the negative x-axis direction). In the above-mentioned pressure-balance expression (1), a sliding resistance of a fluid-tight seal is neglected. The thrust FPP of primary piston 2b can be estimated based on an electric current value of drive motor 50.

On the other hand, the servo-assistance ratio $\alpha$ is represented by the following expression (2).

$$\mathrm{\alpha=Pmc{\times}(APP+AIR)/FIR} \quad \cdots (2)$$

Thus, by substituting the expression (1) for the expression (2), the servo-assistance ratio $\alpha$ can be represented by the following expression (3).

$$\mathrm{\alpha=(1+K{\times}\Delta x\ /FIR){\times}(AIR+APP)/AIR} \quad \cdots (3)$$

According to the servo-assistance control, in order to obtain a desired master-cylinder pressure characteristic, drive motor 50 (the displacement xPP of primary piston 2b) is controlled. Herein, the desired master-cylinder pressure characteristic means a characteristic of a change in master-cylinder pressure Pmc with respect to the displacement xIR of input rod 6 (that is, an xIR-Pmc characteristic). It is possible to obtain or retrieve a desired displacement calculation characteristic showing a change in relative displacement $\Delta x$ (=xPP-xIR) with respect to the displacement xIR of input rod 6, in correspondence with a stroke characteristic (an xIR-xPP characteristic) showing the displacement xPP of primary piston 2b relative to the displacement xIR of input rod 6 and the above-mentioned desired master-cylinder pressure characteristic. On the basis of the desired displacement calculation characteristic data obtained by verification or retrieval, a desired value of relative displacement $\Delta x$ (hereinafter referred to as simply "desired displacement $\Delta x^{*}$") is calculated.

That is, the desired displacement calculation characteristic shows a characteristic of a change in desired displacement $\Delta x^{*}$ with respect to the displacement xIR of input rod 6, so there is a one-to-one correspondence between the displacement xIR of input rod 6 and the desired displacement $\Delta x^{*}$. One desired displacement $\Delta x^{*}$, corresponding to one displacement xIR of input rod 6, can be determined. Thus, by controlling rotation of drive motor 50 (i.e., the displacement xPP of primary piston 2b) in a manner so as to realize the desired displacement $\Delta x^{*}$ determined based on the detected displacement xIR of input rod 6, master-cylinder pressure Pmc of a pressure level corresponding to the desired displacement $\Delta x^{*}$ can be produced in the master cylinder 2.

As described previously, the displacement xIR of input rod 6 is detected by brake manipulated variable detection device 7, the displacement xPP of primary piston 2b is calculated based on a signal from rotation-angle sensor 50a, and thus relative displacement $\Delta x$ can be calculated as the difference (xPP-xIR) between the calculated displacement xPP of primary piston 2b and the detected displacement xIR of input rod 6. Concretely, in the servo-assistance control, the desired displacement $\Delta x^{*}$ is set based on the detected displacement xIR of input rod 6 and the desired displacement calculation characteristic. Then, drive motor 50 is controlled (feedback-controlled) to bring the calculated relative displacement $\Delta x$ closer to the desired displacement $\Delta x^{*}$. Furthermore, an additional stroke sensor for detecting the displacement xPP of primary piston 2b may be provided.

As discussed above, assume that the servo-assistance control has been performed without any expensive leg-power sensor. This contributes to reduced costs. Also, by controlling drive motor 50 in a manner so as to bring the relative displacement $\Delta x$ closer to an arbitrary value within limits, it is possible to produce a greater servo-assistance ratio or a smaller servo-assistance ratio than the servo-assistance ratio determined based on the pressure-receiving surface area ratio (AIR+APP)/AIR, thus enabling a braking force based on the desired servo-assistance ratio to be produced.

In the case of fixed servo-assistance ratio control, input rod 6 and primary piston 2b are displaced together. That is, drive motor 50 is controlled such that the relative position of primary piston 2b with respect to input rod 6 is always maintained at the neutral position, while maintaining relative displacement $\Delta x$ at zero (i.e., $\Delta x$=0). As discussed above, when the primary piston 2b is displaced, maintaining the state of $\Delta x$=0, the servo-assistance ratio $\alpha$ can be univocally determined as the expression $\alpha$=(AIR+APP)/AIR, derived from the expression (3). Therefore, by setting, based on a required servo-assistance ratio, the pressure-receiving surface area AIR of input rod 6 and the pressure-receiving surface area APP of primary piston 2b and by controlling primary piston 2b to bring the displacement xPP of primary piston 2b closer to the displacement xIP of input rod 6, it is possible to always produce a constant servo-assistance ratio (the previously-noted required servo-assistance ratio).

According to the fixed servo-assistance ratio control, the desired master-cylinder pressure characteristic exhibits such a tendency that master-cylinder pressure Pmc, produced due to advancing movement (a displacement in the positive x-axis direction) of input rod 6, increases in the form of a second-order curve, a third-order curve, or a higher-order curve, combined with each other, (hereinafter referred to as simply "in the form of higher-order curve"). Also, the fixed servo-assistance ratio control has a stroke characteristic that the primary piston 2b is displaced the same distance as the displacement xIR of input rod 6 (that is, xPP=xIR). Hence, according to the desired displacement calculation characteristic, obtained based on the above-mentioned stoke characteristic and the above-mentioned desired master-cylinder pressure characteristic, the desired displacement $\Delta x^{*}$ becomes "0" at any displacement xIR of input rod 6.

In contrast to the above, in the case of variable servo-assistance ratio control, desired displacement $\Delta x^{*}$ is set to a predetermined positive value. Drive motor 50 is controlled in a manner so as to bring relative displacement $\Delta x$ closer to the predetermined positive value. Thus, as input rod 6 advances in the direction that master-cylinder pressure Pmc is increased, the displacement xPP of primary piston 2b becomes greater as compared to the displacement xIR of input rod 6. As seen from the above-discussed expression (3), the servo-assistance ratio $\alpha$ becomes a value of $(1+K\times\Delta x/FIR)$ times the input-rod thrust. That is, this means that primary piston 2b is displaced the multiplied value (i.e., the product), obtained by multiplying the displacement xIR of input rod 6 by a proportional gain $(1+K\times\Delta x/FIR)$. In this manner, the servo-assistance ratio $\alpha$ varies depending on relative displacement $\Delta x$, and thus electric booster 5 functions as a servo-assistance source. Hence, it is possible to greatly reduce a brake-pedal leg power, while producing a driver's required braking force (a driver's required deceleration rate).

From the viewpoint of the controllability, it is desirable that the proportional gain $(1+K \times \Delta x / FIR)$ is "1". However, in the case the magnitude of braking force exceeding a driver's brake manipulated variable, for instance, due to emergency braking or the like, is required, it is possible to temporarily vary the proportional gain to a value exceeding "1". Therefore, for the same brake manipulated variable, it is possible to raise the master-cylinder pressure Pmc more, as compared to the usual servo-assistance control (i.e., during the fixed servo-assistance ratio control wherein the proportional gain is fixed to "1), thus enabling a greater braking force to be produced. Hereupon, a determination for "emergency braking" is made depending on whether a time rate of change in sensor signal value from brake manipulated variable detection device 7 (that is, a time rate of change $\Delta xIR$ of displacement xIR of input rod 6) exceeds a predetermined value.

As discussed above, according to the variable servo-assistance ratio control, the advancing movement of primary piston 2b tends to more greatly progress, rather than the advancing movement of input rod 6. Hence, relative displacement $\Delta x$ of primary piston 2b with respect to input rod 6 tends to increase, as the input rod 6 advances. Therefore, according to the variable servo-assistance ratio control mode, drive motor 50 is controlled such that master-cylinder pressure Pmc, produced due to advancing movement of input rod 6, tends to more greatly increase, as compared to the fixed servo-assistance ratio control.

According to the desired master-cylinder pressure characteristic of the variable servo-assistance ratio control, an increase in master-cylinder pressure Pmc, produced due to advancing movement (a displacement in the positive x-axis direction) of input rod 6, tends to become greater (that is, a more rapid master-cylinder pressure characteristic in the form of a higher-order curve) than that of the fixed servo-assistance ratio control. Also, the variable servo-assistance ratio control has a stroke characteristic that a ratio of an increase in displacement xPP of primary piston 2b to an increase in displacement xIR of input rod 6 is greater than "1". Hence, according to the desired displacement calculation characteristic, obtained based on the above-mentioned stoke characteristic and the above-mentioned desired master-cylinder pressure characteristic, the desired displacement $\Delta x^*$ increases at a predetermined ratio, as the displacement xIR of input rod 6 increases.

In addition to the above-mentioned control in which drive motor 50 is controlled such that the displacement xPP of primary piston 2b becomes greater than the displacement xIR of input rod 6, as input rod 6 advances in the direction that master-cylinder pressure Pmc increases, variable servo-assistance ratio control may include another control that drive motor 50 is controlled such that the displacement xPP of primary piston 2b becomes reduced in comparison with the displacement xIR of input rod 6, as input rod 6 moves in the direction that master-cylinder pressure Pmc increases. In this manner, this variable servo-assistance ratio control can be applied to regenerative cooperation brake control in which the brake fluid pressure of the hydraulic brake system can be reduced by a pressure value corresponding to a regenerative brake force of the hybrid vehicle by varying the proportional gain to a value less than "1".

[INRUSH CURRENT SUPPRESSION CONTROL IN PRESENCE OF BATTERY FAILURE]

In the first embodiment, when battery 60, serving as a main electric power source, is normally operating without any battery failure, electric-booster controller 8 controls relative displacement $\Delta x$ between input rod 6 and primary piston 2b, by virtue of a power supply from battery 60 to drive motor 50. In contrast to such a normal relative-displacement feedback (F/B) control, during a back-up F/B control mode in which battery 60, serving as the main electric power source, has been failed and thus electric power is supplied from DLC 61, serving as the back-up power source, to drive motor 50, inrush current suppression control is executed to reduce an inrush current by suppressing a startup load of drive motor 50.

[INRUSH CURRENT SUPPRESSION CONTROL PROCESSING]

Fig. 2 is the flowchart illustrating the control flow of inrush current suppression control processing, executed within the electric-booster controller 8 of brake device 1 of the first embodiment. Details of respective steps of the control flow are hereunder described. This control routine is executed as interrupt routines to be triggered each time the driver starts to depress the brake pedal BP.

At step S1, a check is made to determine whether battery 60 has been failed. When the answer to this step is in the affirmative (YES), the routine proceeds to step S2. Conversely when the answer to this step is in the negative (NO), the routine proceeds to step S5.

At step S2, the servo-assistance function is stopped (that is, the operation of drive motor 50 is stopped), and then the routine proceeds to step S3.

At step S3, a manipulated variable of brake pedal BP (i.e., the displacement xIR of input rod 6 in the x-axis direction) is read based on the signal from brake manipulated variable detection device 7, and then the routine proceeds to step S4.

At step S4, a check is made to determine whether the displacement xIR of input rod 6 in the x-axis direction, read through step S3, is greater than or equal to a predetermined value (a predetermined displacement x1). When the answer to this step is in the affirmative (YES), the routine proceeds to step S5. Conversely when the answer to this step is in the negative (NO), the routine proceeds to step S6. Hereupon, the predetermined displacement x1 corresponds to a displacement of input rod 6 in the x-axis direction when the flanged portion 2i of primary piston 2b begins to move apart from the movable member 58 of rotary-to-translation converter 55. In the shown embodiment, the predetermined displacement x1 is set to be greater than the clearance L1 between the end face of the input-rod large-diameter portion 6f, facing in the positive x-axis direction, and the end face of the primary-piston partition wall 2h, facing in the negative x-axis direction.

At step S5, drive motor 50 is started up so as to initiate a servo-assistance action, and then the routine shifts to RETURN" (electric-booster control means).

At step S6, a current deceleration rate is read, and simultaneously a driver's required deceleration rate (a driver's required braking force) is calculated (required deceleration rate calculation means). The driver's required deceleration rate is calculated based on the displacement xIR of input rod 6 in the x-axis direction, read through step S3. On the other hand, the current deceleration rate is calculated based on the sensor signal (the detected value) from fluid-pressure sensor 13. In lieu thereof, the current deceleration rate may be determined based on the G-sensor signal from a longitudinal acceleration sensor, indicated by the two-dotted line in Fig. 1.

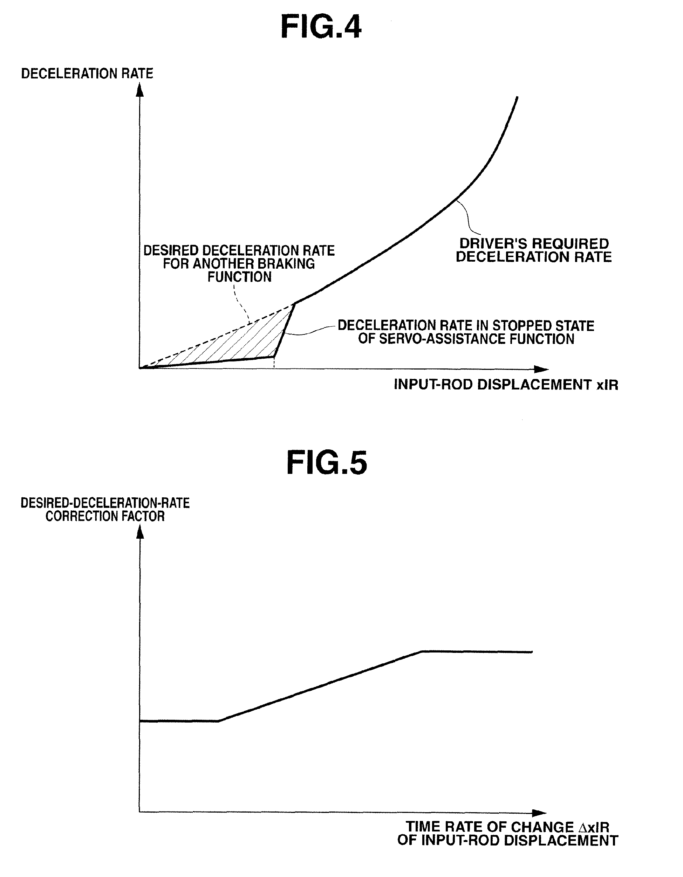

At step S7, a deficiency for the required deceleration rate is set as a desired deceleration rate for another braking function, for example, a regenerative brake, and then a braking-force command value for another braking function, corresponding to the desired deceleration rate, is calculated. Thereafter, the routine proceeds to step S8. Hereupon, the driver's required deceleration rate corresponds to a deceleration rate obtained when the usual servo-assistance control (the fixed servo-assistance ratio control) has been executed responsively to the manipulated variable of brake pedal BP. The driver's required deceleration rate is calculated from the characteristic curve of Fig. 4. That is, as can be seen from the characteristic curve of Fig. 4, the desired deceleration rate for another braking function can be calculated by subtracting the current deceleration rate from the driver's required deceleration rate.

At step S8, a check is made to determine whether a higher responsiveness for another braking function is required. When the answer to this step is in the affirmative (YES), the routine proceeds to step S9. Conversely when the answer to this step is in the negative (NO), the routine proceeds to step S11. Concretely, at step S8, a check is made to determine whether the subtracted value obtained by subtracting the current deceleration rate from the desired deceleration rate for another braking function, calculated through step S7, exceeds a predetermined threshold value. When the subtracted value exceeds the predetermined threshold value, it is determined that the higher responsiveness is required.

At step S9, the manipulated variable of brake pedal BP (i.e., the displacement xIR of input rod 6 in the x-axis direction) is read again. A time rate of change ΔxIR of the input-rod displacement (i.e., a stroke velocity) is calculated based on the difference between the manipulated variable read again and the manipulated variable (i.e., the displacement xIR of input rod 6 in the x-axis direction) read through step S3 (operation speed detection means). Then, the routine proceeds to step S10.

At step S10, a desired-deceleration-rate correction factor is calculated, based on the time rate of change ΔxIR (i.e., the stroke velocity) of the input-rod displacement, calculated through step S9, from the map of Fig. 5. The braking-force command value is corrected by multiplying the braking-force command value obtained through step S7 by the calculated desired-deceleration-rate correction factor. Another braking function is operated responsively to the corrected braking-force command value (braking-force compensation means), and then the routine shifts to "RETURN".

Fig. 5 is the desired-deceleration-rate correction factor calculation map of the device of the first embodiment showing how the desired-deceleration-rate correction factor has to be varied with respect to the time rate of change ΔxIR of the input-rod displacement. Regarding the desired-deceleration-rate correction factor, assuming that its lower limit is set to "1.0", its upper limit is set approximately to "1.5". As a whole, the characteristic exhibits a tendency that the correction factor increases, as the time rate of change ΔxIR of the input-rod displacement becomes higher.

At step S11, another braking function is operated responsively to the braking-force command value (i.e., a non-corrected desired deceleration rate), calculated through step S7 (braking-force compensation means), and then the routine shifts to "RETURN".

The operation is hereunder described in detail.

[INRUSH CURRENT SUPPRESSION ACTION]

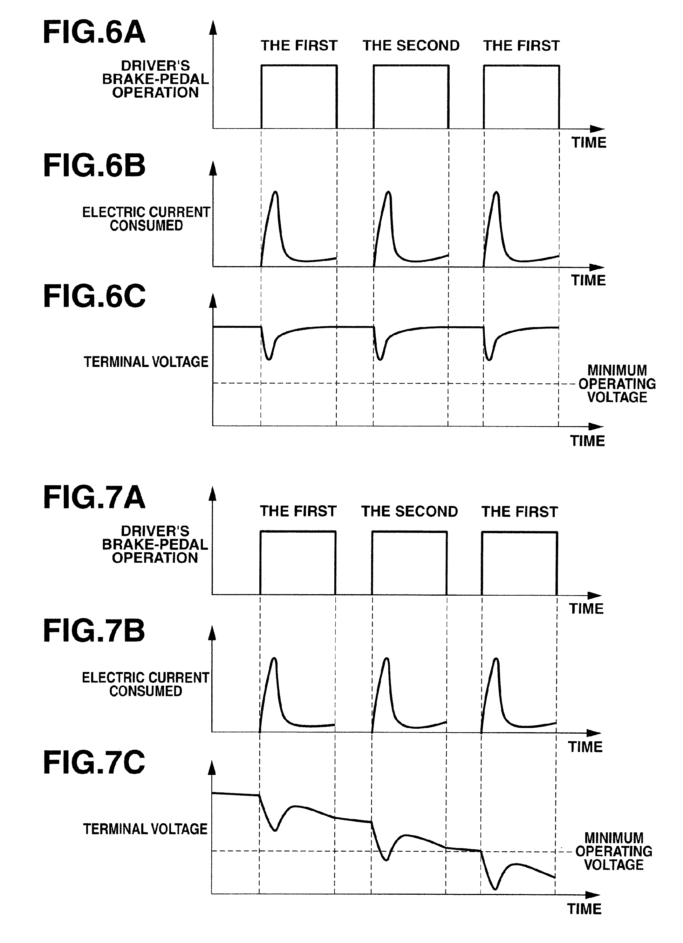

In the brake device 1 of the first embodiment, the spring force of return spring 59 acts on the ball-screw nut 56 and the ball-screw shaft 57 through the flanged portion 2i of primary piston 2b and the movable member 58, and thus the inertia load (startup load) on the drive motor 50 tends to become comparatively high. Owing to the comparatively high inertia load, an initial torque also tends to become high during a startup period of the motor. As seen from Figs. 6A-6C, a high inrush current tends to be generated (see Fig. 6B). The term "inrush current" means that a very high startup current flows when the electric power supply has been spent as compared to a steady state in a wirewound equipment/inductor such as an electric motor or a potential transformer, or in an electrical equipment such as a large capacity of smoothing capacitor or a decoupling capacitor.

At this time, a voltage drop occurs due to a resistance (for example, a wire-harness resistance of main electric power supply circuit 63) interleaved between battery 60 and drive motor 50, and thus a terminal voltage of drive motor 50 tends to drop greatly.

Usually, in the brake device 1, a power supply voltage (a voltage of battery 60) is estimated based on the terminal voltage of drive motor 50. When the estimated power supply voltage falls, the servo-assistance ratio is controlled to a smaller value. Furthermore, when the power supply voltage reduces to below a minimum operating voltage of drive motor 50, the servo-assistance control is stopped. For the reasons discussed above, in the case of an excessive inrush current during a motor startup period, a power supply voltage cannot be estimated accurately, thus hindering the variable servo-assistance ratio control.

Furthermore, in the presence of a failure in battery 60, that is, during a power supply from DLC 61 to drive motor 50, as can be seen from Figs. 7A-7C, an electromotive force tends to drop due to power consumption of DLC 61. Hence, when the power supply voltage drops down to a voltage level lower than a normal voltage level (see Fig. 7C), the power supply voltage reduces to below the minimum operating voltage and thus the servo-assistance function becomes disabled.

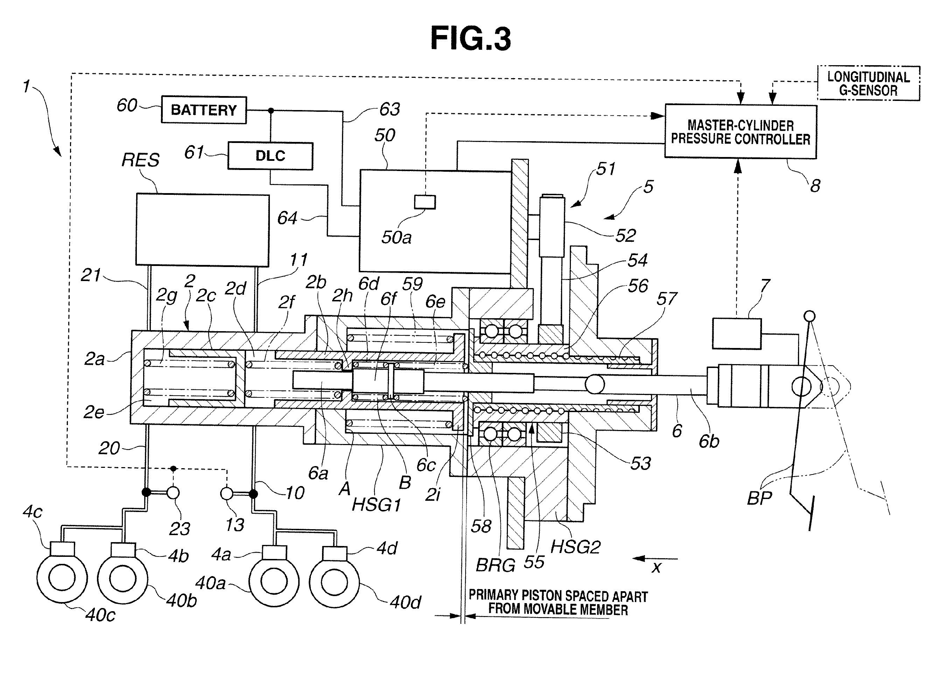

In contrast, in the brake device 1 of the first embodiment, inrush current suppression control is executed such that the servo-assistance function is initiated by starting up the drive motor 50, at the time when primary piston 2b starts to move apart from the movable member 58 of rotary-to-translation motion converter 55 with the predetermined displacement x1 of input rod 6 in the positive x-axis direction (see Fig. 3, and also see the flow of Fig. 2 from step S1 through steps S2, S3, and S4 to step S5).

When the flanged portion 2i of primary piston 2b has moved apart from the movable member 58, there is no spring force of return spring 59 acting on the ball-screw nut 56 and ball-screw shaft 57 through the movable member 58. That is, when starting up the drive motor 50, there is no reaction force applied from primary piston 2b to the ball-screw mechanism and thus the initial torque tends to become small.

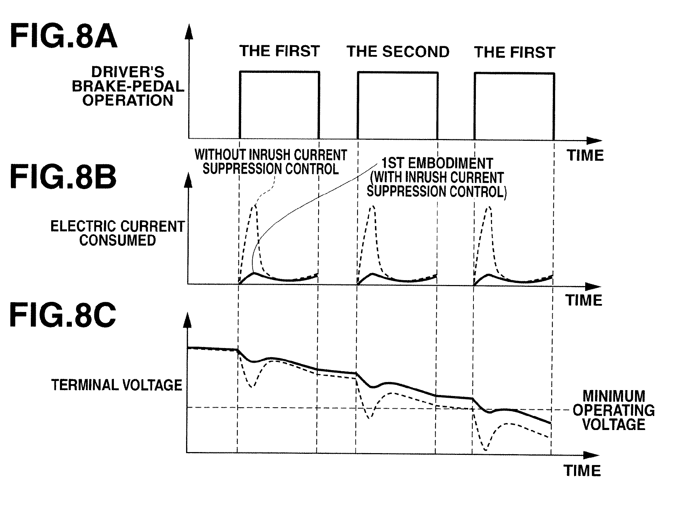

Therefore, as can be seen from Figs. 8A-8C, as compared to a system, which does not adopt the previously-discussed inrush current suppression control, in the system of the embodiment the inrush current of the motor startup period can be reduced to a large extent (see Fig. 8B). As a result of this, a voltage drop between DLC 61 and drive motor 50 tends to become small and thus the power supply voltage can be estimated accurately. Additionally, because of the suppressed power consumption, it is possible to retard the point of time, at which the terminal voltage of drive motor 50 reduces to below the minimum operating voltage, thus increasing or lengthening the number of executions of servo-assistance control and the execution time of servo-assistance control. For instance, in the case of the system, which does not adopt the previously-discussed inrush current suppression control, at the second braking action, the terminal voltage reduces to below the minimum operating voltage and thus the servo-assistance function becomes disabled. In contrast, in the first embodiment, at the second braking action, the servo-assistance function remains enabled (see Fig. 8C).

As discussed above, at step S4, the startup load of drive motor 50 is determined depending on whether primary piston 2b becomes spaced apart from the movable member 58. Thus, it is possible to estimate the startup load on the drive motor 50 without directly measuring the reaction force acting on the movable member 58.

Also, at step S4, the information on whether primary piston 2b becomes spaced apart from the movable member 58 is determined based on the displacement xIR of input rod 6 in the x-axis direction, detected by brake manipulated variable detection device 7. The displacement of primary piston 2b correlates well with the displacement xIR of input rod 6 in the x-axis direction, and thus the displacement of primary piston 2b can be estimated or derived by watching or monitoring the displacement xIR of input rod 6 in the x-axis direction. Usually, the existing construction of the electric-booster equipped brake device, often includes a brake manipulated variable detection device (e.g., a brake-pedal stroke sensor). Therefore, this eliminates the necessity for an additional sensor.

According to the inrush current suppression control of the first embodiment, a startup of drive motor 50 is stopped, until primary piston 2b becomes spaced apart from the movable member 58. At this time, a deficiency for the driver's required deceleration rate can be compensated by a braking force produced by another braking function, i.e., a regenerative brake (see the flow of Fig. 2 from step S1 through steps S2, S3, S4, and S6 to step S7).

During a time period from the time when the driver starts to depress the brake pedal BP to the time when a startup-load suppression control action (an inrush current suppression control action) of drive motor 50 has been completed, the servo-assistance function does not operate. Hence, a deceleration rate corresponding to the depression amount of brake pedal BP, that is, the driver's required deceleration rate cannot be obtained, and thus such a state may cause the driver to feel discomfort. Therefore, by producing and compensating the under-deceleration rate by means of another braking function, it is possible to achieve the driver's required deceleration rate, while suppressing the inrush current. This reduces unnatural feeling experienced by the driver.

When operating another braking function under a state where a deficiency for the driver's required deceleration rate is great, it is necessary to quickly raise a braking force, produced by another braking function. For this reason, when step S8 determines that the higher responsiveness is required, the braking-force command value for another braking function is increased and corrected based on the time rate of change $\Delta xIR$ of the input-rod displacement (i.e., the stroke velocity) through step S10. In this manner, a delay of response of the actual deceleration rate with respect to the driver's required deceleration rate is suppressed.

The effects are hereunder described in detail.

The brake device 1 of the first embodiment can provide the following effects.

(1) The brake device includes an input rod 6 displaced in an axial direction responsively to a driver's brake-pedal operation made to brake pedal BP by the driver, a piston (primary piston 2b) for pressurizing a fluid pressure in a master cylinder 2a responsively to a displacement of input rod 6, an input-rod displacement detection device (input-rod displacement detection means) 7 for detecting the displacement of input rod 6, a movable member (pushing means) 58 for pushing the piston in a direction for pressurizing of the fluid pressure, a biasing member (biasing means) 59 for biasing the piston in a direction for reducing of the fluid pressure, an electric booster 5 for pushing the movable member 58 against a biasing force of the biasing member 59 and for assisting a movement of the piston in the direction for pressurizing of the fluid pressure, an assisting force device (assisting force means) for producing an assisting force that pushes the piston in the direction for pressurizing of the fluid pressure against the biasing force of the biasing member 59 upon detecting by the input-rod displacement detection device 7 that the input rod 6 has been displaced a predetermined displacement x1, and an electric-booster controller (electric-booster control means) 8 for starting up the electric booster 5 after the assisting force has been produced by the assisting force device. Hereby, it is possible to reduce a startup load of electric booster 5, thus suppressing a startup-period inrush current. By the way, the assisting force device is configured to achieve an assistance by a mechanical force without using any electric power or by a force produced by a comparatively small electric power.

(2) The previously-discussed predetermined displacement x1 is set to a distance in a straight line from an initial position of input rod 6 to a certain position at which the input rod 6 has been displaced when the piston (primary piston 2b) starts to be spaced apart from the movable member 58 (that is, a clearance L1 between the end face of the input-rod large-diameter portion 6f, facing in the positive x-axis direction, and the end face of the primary-piston partition wall 2h, facing in the negative x-axis direction, in a brake inoperative state). Hereby, it is possible to certainly suppress a startup load of electric booster 5 (i.e., a startup-period inrush current). This contributes to the reduced electric power consumption and smooth startup of electric booster 5.

(3) Also provided are a battery 60 (a main electric power source) for supplying an electric power to electric booster 5 and an electric double layer capacitor (DLC) 61 for supplying an electric power to electric booster 5 in the presence of a failure of battery 60. The electric-booster controller 8 is configured to start up the electric booster 5 by means of the DLC (the back-up electric power source) 61, upon detecting that the input rod 6 has been displaced the predetermined displacement x1. Hereby, even in the presence of a failure in battery 60, it is possible to increase or lengthen the number of executions of servo-assistance control and the execution time of servo-assistance control.

(4) The previously-discussed electric-booster controller 8 includes a required deceleration rate calculation section (required deceleration rate calculation means) for calculating a driver's required deceleration rate, and a braking-force compensation section (braking-force compensation means) for compensating for a deficiency between the driver's required deceleration rate calculated by the required deceleration rate calculation section and a deceleration rate produced by the driver's brake-pedal operation by a braking force produced by another braking function (e.g., a regenerative brake) during a time interval from a starting point of the driver's brake-pedal operation to a point of time when the electric booster 5 starts to operate. Hereby, it is possible to achieve the driver's required deceleration rate, while suppressing the inrush current, thus reducing unnatural feeling experienced by the driver.

(5) The previously-discussed electric-booster controller 8 further includes an operation speed detector (operation speed detection means) for detecting an operation speed of the brake pedal BP. The braking-force compensation section is configured to increase a responsiveness of a compensation braking force of another braking function (another braking device), as the operation speed, detected by the operation speed detector, increases. Hereby, it is possible to suppress a response delay of the actual deceleration rate with respect to the driver's required deceleration rate.

(6) The previously-discussed assisting force device (assisting force means) is configured to apply the assisting force to the piston (primary piston 2b) with at least an axial stroke of input rod 6 to the predetermined displacement x1, utilizing the input rod 6, which is displaced in the axial direction responsively to the driver's brake-pedal operation. Hence, it is possible to produce the assisting force by means of a simple mechanical structure (the partition wall 2h of primary piston 2b and the input-rod large-diameter portion 6f). This contributes to the reduced costs of the inrush current suppression control system.

(7) In a method of controlling a brake device including an input rod 6 displaced in an axial direction responsively to a driver's brake-pedal operation made to brake pedal BP by the driver, a piston (primary piston 2b) for pressurizing a fluid pressure in a master cylinder 2a responsively to a displacement of input rod 6, an input-rod displacement detection device (input-rod displacement detection means) 7 for detecting the displacement of the input rod 6, a movable member (pushing means) 58 for pushing the piston in a direction for pressurizing of the fluid pressure, a biasing member (biasing means) 59 for biasing the piston in a direction for reducing of the fluid pressure, and an electric booster 5 for pushing the movable member 58 against a biasing force of the biasing member 59 and for assisting a movement of the piston in the direction for pressurizing of the fluid pressure, an assisting force that pushes the piston in the direction for pressurizing of the fluid pressure against the biasing force of the biasing member 59, is produced upon detecting by the input-rod displacement detection device 7 that the input rod 6 has been displaced a predetermined displacement x1, and the electric booster 5 is started up after the assisting force has been produced. Hereby, it is possible to reduce a startup load of electric booster 5, thus suppressing a startup-period inrush current.

(8) In a brake device equipped with a piston (primary piston 2b), which is biased in a direction for reducing of a brake fluid pressure in a master cylinder 2a and configured to move in a direction for pressurizing of the fluid pressure responsively to a driver's brake-pedal operation made to the brake pedal BP by the driver, and an electric booster 5 for assisting a movement of the piston in the direction for pressurizing of the fluid pressure, an assisting force device (assisting force means) is provided for producing an assisting force that pushes the piston in the direction for pressurizing of the fluid pressure prior to a startup of the electric booster 5. Hereby, a startup load of electric booster 5 can be reduced, thus suppressing a startup-period inrush current. By the way, the assisting force device is configured to achieve an assistance by a mechanical force without using any electric power or by a force produced by a comparatively small electric power.

The brake device of the first embodiment is configured to determine whether the main electric power source is failed or unfailed, and also configured to execute inrush current suppression control for reducing a startup load of the electric booster when the main electric power source is failed. In lieu thereof, the brake device may be configured such that, regardless of a state of the main electric power source, inrush current suppression control is always executed to reduce a startup load of the electric booster, each time the electric booster is started up (see the second embodiment and the third embodiment, both described later).

In the first embodiment, the operation-enabling timing (start time) of operation of the electric booster is set to a point of time when a reaction force, applied from primary piston 2b to the electric booster, becomes zero. On the assumption that the inrush current can be reduced properly, the operation-enabling timing may be set to an earlier time than the point of time when the reaction force, applied from the piston to the booster, becomes zero (see the second and third embodiments described later). Alternatively, within a limited range in which the responsiveness of servo-assistance control is not so much affected, the operation-enabling timing may be set to a later time than the point of time when the reaction force, applied from the piston to the booster, becomes zero (see the second and third embodiments described later).

## SECOND EMBODIMENT

The construction of the brake device of the second embodiment is hereunder described.

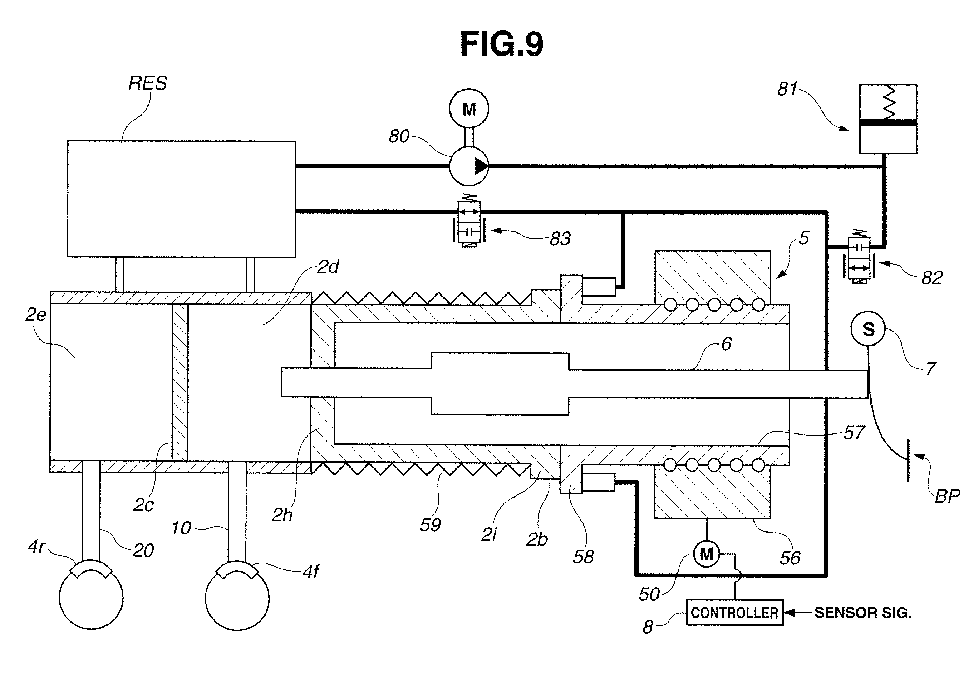

Fig. 9 is the general system diagram of the brake device of the second embodiment. The fundamental construction of the brake device of the second embodiment is similar to that of the first embodiment, except that the assisting force devices (assisting force means) of the first and second embodiments differ from each other. For the purpose of comparison between the first embodiment shown in Fig. 1 and the second embodiment shown in Fig. 9, the same reference signs used to designate elements in the first embodiment will be applied to the corresponding elements used in the second embodiment. As can be appreciated from the general system diagram of Fig. 9, for the purpose of simplification of the disclosure, the first and second housing members HSG1-HSG2 of dual master cylinder 2 and the fluid-pressure sensors 13 and 23 are not shown.

Briefly speaking, in the case of the brake device of the second embodiment, the assisting force device (assisting force means) is configured to hydraulically apply an assisting force to primary piston 2b by pressure accumulation means, including a pressure-accumulation pump and a pressure accumulator.

Fig. 9 shows the schematic construction of the brake device and the pressure accumulator of the second embodiment. During the servo-assistance control mode, the operation of drive motor 50 is controlled based on sensor signals from rotation-angle detectors (rotation-angle sensors 50a), attached to the brake manipulated variable detection device 7 and drive motor 50. An output of drive motor 50 is transmitted via ball-screw shaft 57 and movable member 58 to primary piston 2b, and then converted into a fluid pressure in each of the primary and secondary fluid-pressure chambers 2d and 2e. The converted fluid pressure (equivalent to the master-cylinder pressure Pmc) is supplied to each of wheel cylinders 4f-4r. Under the servo-assistance control, the braking force can be applied. Conversely when the braking action ends, primary piston 2b returns back to its initial position mainly by the spring force of return spring 59.

In the braking device of the second embodiment, the assisting force device (assisting force means), which is provided for inrush current suppression, is constructed by a pressure-accumulation system having a pressure-accumulation pump motor 80, which is driven by a smaller electric power in comparison with the drive motor 50, a pressure accumulator 81, a pressure-intensifier valve 82, and a pressure-reduction valve 83. The operation of the pressure-accumulation system is controlled by electric-booster controller 8, as hereunder described in detail.

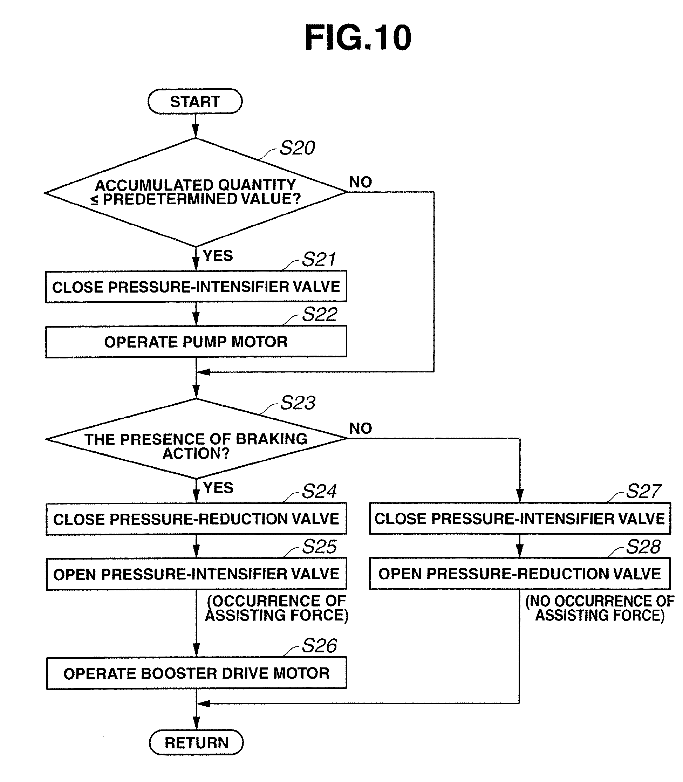

Fig. 10 is the flowchart illustrating the control flow of inrush current suppression control processing, executed within the electric-booster controller 8 of the brake device of the second embodiment, employing the pressure-accumulation system mainly constructed by pressure-accumulation pump motor 80 and pressure accumulator 81. Details of respective steps of the control flow are hereunder described. This control routine is also executed as interrupt routines to be triggered each time the driver starts to depress the brake pedal BP.

At step S20, a check is made to determine whether the accumulated quantity of potential energy of working fluid in pressure accumulator 81 is less than or equal to a predetermined value. When the answer to this step is in the affirmative (YES), the routine proceeds to step S21. Conversely when the answer to this step is in the negative (NO), the routine proceeds to step S23.

Subsequently to step S20, at steps S21 and S22, under the condition where the accumulated quantity of potential energy of working fluid in pressure accumulator 81 becomes less than or equal to the predetermined value, the pressure-intensifier valve 82 is held closed (de-energized), and pump motor 80 is driven, and whereby the potential energy of working fluid in pressure accumulator 81 can be accumulated. Thereafter, the routine shifts to step S23.

At step S23, a check is made to determine whether the driver's braking action (i.e., the driver's brake-pedal operation) is present or absent. When the answer to this step is in the affirmative (YES), the routine proceeds to a first group of steps S24-S26. Conversely when the answer to this step is in the negative (NO), the routine proceeds to a second group of steps S27-S28.

When step S23 determines that the driver's braking action is present, through the first group of steps S24-S26 the pressure-reduction valve 83 is held closed (energized) and the pressure-intensifier valve 82 is held open (energized). As a result of this, the pressure-accumulation system is enabled to generate an assisting force, and thus the working-fluid pressure in pressure accumulator 81 is applied via the pressure-intensifier valve 82, held in the valve-open state, through the movable member 58 to the flanged portion 2i of primary piston 2b, as the assisting force. Immediately after application of the assisting force, the drive motor 50 of electric booster 5 is started up so as to initiate a servo-assistance action, while applying the assisting force to the flanged portion 2i of primary piston 2b by means of the pressure-accumulation system. Thereafter, the routine shifts to "RETURN".

Also in the brake device of the second embodiment, in a similar manner to the effects (see the characteristics indicated by the solid lines in Figs. 8B-8C) obtained by the brake device of the first embodiment, namely, suppressed inrush current effect and reduced electric power consumption, by execution of the first group of steps S24-S26, it is possible to reduce inrush current as well as electric power consumption of drive motor 50. Furthermore, the assisting-force addition, achieved by pressure accumulator 81, is superior to the servo-assistance action, achieved by drive motor 50 in responsiveness. As a whole, it is possible to improve the servo-assistance action timing (i.e., the responsiveness) of electric booster 5.

Conversely when step S23 determines that the driver's braking action is absent, through the second group of steps S27-S28, the pressure-intensifier valve 82 is held closed (de-energized) and the pressure-reduction valve 83 is held open (de-energized). As a result of this, generation of the assisting force by means of the pressure-accumulation system is inhibited (disabled). Hence, primary piston 2b can be returned to its initial position by the spring force of return spring 59.

The effects are hereunder described in detail.

The brake device of the second embodiment can provide the following effects, in addition to the effect (1) obtained by the brake device of the first embodiment.

(9) In the brake device of the second embodiment, the previously-discussed assisting force device (assisting force means) is configured to hydraulically apply an assisting force to primary piston 2b in the form of a working-fluid pressure by way of the pressure-accumulation system mainly constructed by the pressure-accumulation pump and the pressure accumulator. Hence, it is possible to enhance, as a whole, the responsiveness of servo-assistance action of electric booster 5, since the assisting-force addition, achieved by the working-fluid pressure (pressure accumulator 81), is superior to the servo-assistance action, achieved by drive motor 50 in responsiveness. Additionally, regardless of a state of the main electric power source, it is possible to always execute inrush current suppression control so as to reduce a startup load of electric booster 5 (see the flow of Fig. 10 from step S23 through steps S24-S25 to step S26). Furthermore, with respect to a point of time (serving as a reference point) when a reaction force, applied from primary piston 2b to electric booster 5, becomes zero, the operation-enabling timing (start time) of operation of electric booster 5 can be set to a somewhat earlier time or to a somewhat later time than the reference point. Thus, it is possible to appropriately adjust the responsiveness of servo-assistance control.

**THIRD EMBODIMENT**

The construction of the brake device of the third embodiment is hereunder described.

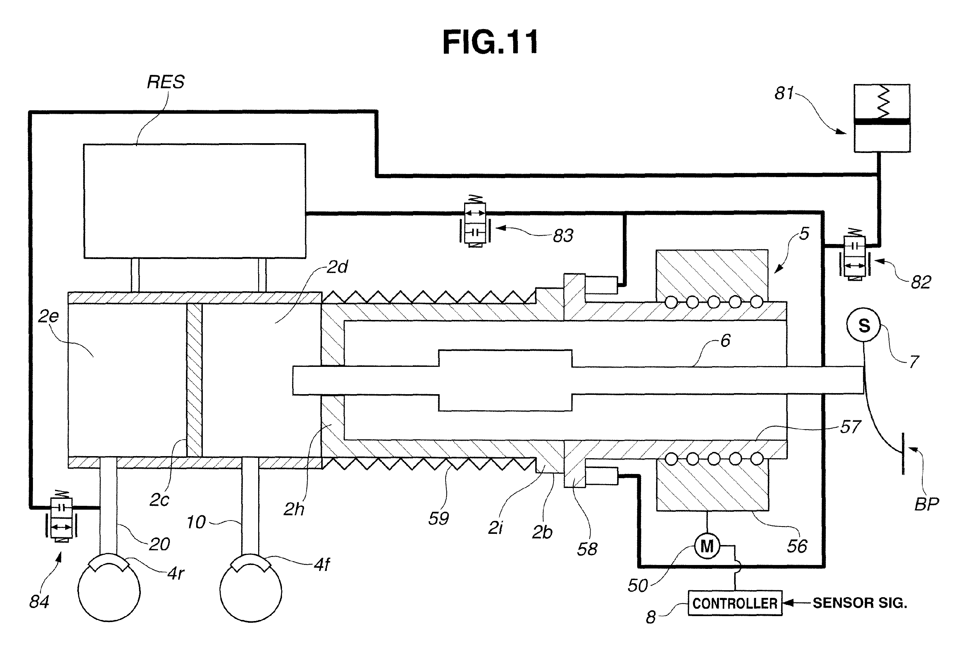

Fig. 11 is the general system diagram of the brake device of the third embodiment. The fundamental construction of the brake device of the third embodiment is similar to that of the first embodiment or the second embodiment, except that the assisting force devices (assisting force means) of the first and third embodiments differ from each other and the third embodiment is somewhat modified from the second embodiment. For the purpose of comparison between the first embodiment shown in Fig. 1 and the third embodiment shown in Fig. 11, the same reference signs used to designate elements in the first embodiment will be applied to the corresponding elements used in the third embodiment. As can be appreciated from the general system diagram of Fig. 11, for the purpose of simplification of the disclosure, the first and second housing members HSG1-HSG2 of dual master cylinder 2 and the fluid-pressure sensors 13 and 23 are not shown.

Briefly speaking, in the case of the brake device of the third embodiment, the assisting force device (assisting force means) is configured to hydraulically apply an assisting force to primary piston 2b by pressure accumulation means, including a pressure-accumulation valve and a pressure accumulator, without utilizing a pressure-accumulation pump.

Fig. 11 shows the schematic construction of the brake device and the pressure accumulator of the third embodiment.

In the braking device of the third embodiment, the assisting force device (assisting force means), which is provided for inrush current suppression, is constructed by a pressure-accumulation system having a pressure accumulator 81, a pressure-intensifier valve 82, a pressure-reduction valve 83, and a pressure-accumulation valve 84. The operation of the pressure-accumulation system is controlled by electric-booster controller 8, as hereunder described in detail. As shown in Fig. 11, pressure-accumulation valve 84 is disposed in a communication line intercommunicating a port of pressure accumulator 81 and either one (concretely, in Fig. 11, the secondary circuit 20) of the two hydraulic circuits for wheel cylinders 4f-4r installed on respective road wheels.

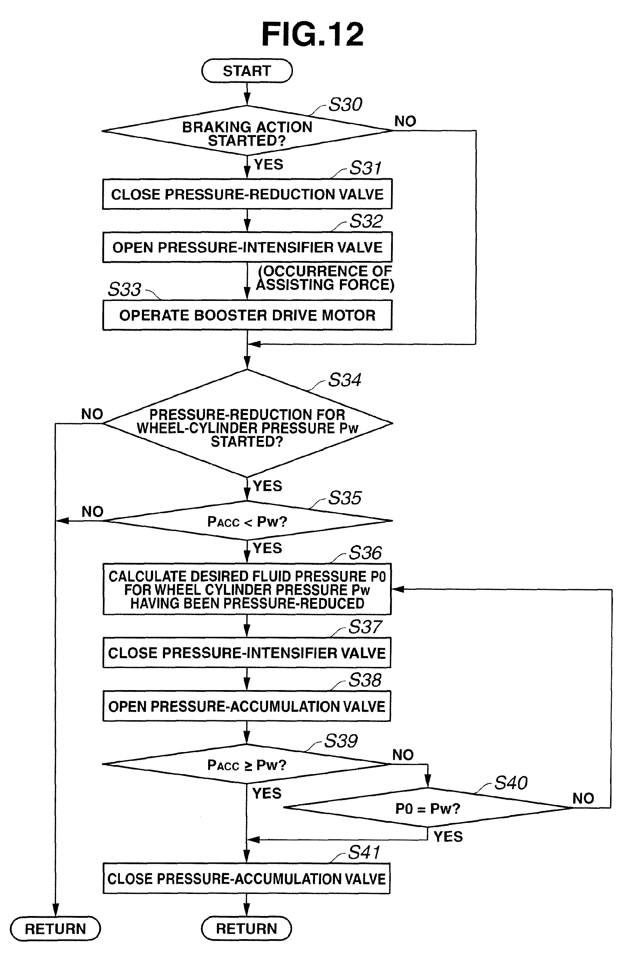

Fig. 12 is the flowchart illustrating the control flow of inrush current suppression control processing, executed within the electric-booster controller 8 of the brake device of the third embodiment, employing the pressure-accumulation system mainly constructed by pressure-accumulation valve 84 and pressure accumulator 81. Details of respective steps of the control flow are hereunder described. This control routine is also executed as interrupt routines to be triggered each time the driver starts to depress the brake pedal BP.

At step S30, a check is made to determine whether a driver's braking action (a driver's brake-pedal operation) has been started. When the answer to this step is in the affirmative (YES), the routine proceeds to a series of steps S31-S33. Conversely when the answer to this step is in the negative (NO), the routine jumps to step S34.

When step S30 determines that the driver's braking action has been started, through steps S31-S33, the pressure-reduction valve 83 is held closed (energized) and the pressure-intensifier valve 82 is held open (energized). As a result of this, the pressure-accumulation system is enabled to generate an assisting force, and thus the working-fluid pressure in pressure accumulator 81 is applied via the pressure-intensifier valve 82, held in the valve-open state, through the movable member 58 to the flanged portion 2i of primary piston 2b, as the assisting force. Immediately after application of the assisting force, the drive motor 50 of electric booster 5 is started up so as to initiate a servo-assistance action, while applying the assisting force to the flanged portion 2i of primary piston 2b by means of the pressure-accumulation system. Thereafter, the routine shifts to step S34.

At step S34, a check is made to determine whether a pressure reduction in wheel-cylinder pressure Pw has been started. When the answer to this step is in the affirmative (YES), the routine proceeds to step S35. Conversely when the answer to this step is in the negative (NO), the routine shifts to "RETURN".

When step S34 determines that a pressure reduction in wheel-cylinder pressure Pw has been started, through step S35, another check is made to determine whether the working-fluid pressure in pressure accumulator 81 (i.e., accumulator pressure PACC) is less than the wheel-cylinder pressure Pw. When the answer to this step is in the affirmative (YES), the routine proceeds to step S36. Conversely when the answer to this step is in the negative (NO), the routine shifts to "RETURN".

When the answer to step S35 is affirmative (YES), that is, when accumulator pressure PACC is less than wheel-cylinder pressure Pw, a desired fluid pressure P0 for wheel-cylinder pressure Pw having been pressure-reduced is calculated through step S36.

Subsequently to step S36, through steps S37-S38, the pressure-intensifier valve 82 is held closed (de-energized) and the pressure-accumulation valve 84 is held open (energized). As a result of this, the fluid pressure is introduced from the wheel cylinder 4r via the pressure-accumulation valve 84 to the pressure accumulator. Thereafter, the routine shifts to step S39.

At step S39, a check is made to determine whether accumulator pressure PACC is greater than or equal to wheel-cylinder pressure Pw. When the answer to this step is in the affirmative (YES), the routine proceeds to step S41. Conversely when the answer to this step is in the negative (NO), the routine proceeds to step S40.

When the answer to step S39 is affirmative (YES), that is, when accumulator pressure PACC is greater than or equal to wheel-cylinder pressure Pw, through step S41 the pressure-accumulation valve 84 is held closed (de-energized). As a result of this, the pressure-accumulating action terminates. Conversely when the answer to step S39 is negative (NO), that is, when accumulator pressure PACC is less than wheel-cylinder pressure Pw, through step S40 a check is made to determine whether the desired fluid pressure P0 for wheel-cylinder pressure Pw having been pressure-reduced is reached.

A series of steps S36-S40 are repeatedly executed, until step S40 determines that wheel-cylinder pressure Pw has reached the desired fluid pressure P0. When step S40 determines that wheel-cylinder pressure Pw has reached the desired fluid pressure P0, through step S41 the pressure-accumulation valve 84 is held closed (de-energized). As a result of this, the pressure-accumulating action terminates.

The effects are hereunder described in detail.
The brake device of the third embodiment can provide the following effects, in addition to the effect (1) obtained by the brake device of the first embodiment.

(10) In the brake device of the third embodiment, the previously-discussed assisting force device (assisting force means) is configured to hydraulically apply an assisting force to primary piston 2b in the form of a working-fluid pressure by way of the pressure-accumulation system mainly constructed by the pressure-accumulation valve and the pressure accumulator. Hence, it is possible to enhance, as a whole, the responsiveness of servo-assistance action of electric booster 5, since the assisting-force addition, achieved by the working-fluid pressure (pressure accumulator 81), is superior to the servo-assistance action, achieved by drive motor 50 in responsiveness. Additionally, regardless of a state of the main electric power source, it is possible to always execute inrush current suppression control so as to reduce a startup load of electric booster 5 (see the flow of Fig. 12 from step S30 through steps S31-S32 to step S33). Furthermore, with respect to a point of time (serving as a reference point) when a reaction force, applied from primary piston 2b to electric booster 5, becomes zero, the operation-enabling timing (start time) of operation of electric booster 5 can be set to a somewhat earlier time or to a somewhat later time than the reference point. Thus, it is possible to appropriately adjust the responsiveness of servo-assistance control. Additionally, the brake device of the third embodiment does not use any pressure-accumulation pump, and thus its pressure-accumulation system is simple in construction, as compared to that of the second embodiment. Moreover, the pressure-accumulation system of the brake device of the third embodiment is configured to efficiently accumulate or store part of the wheel-cylinder pressure Pw during a pressure-reduction mode for wheel-cylinder pressure Pw and also to utilize the accumulated working-fluid pressure in the pressure accumulator as an assisting force to be applied to primary piston 2b. Thus, it is possible to effectively suppress energy consumption.

While the foregoing is a description of the preferred embodiments carried out the invention, it will be understood that the invention is not limited to the particular embodiments shown and described herein, but that various changes and modifications may be made without departing from the scope or spirit of this invention.

In the shown embodiments, another braking function is exemplified in a regenerative brake. However, in an anti-skid brake system (ABS) equipped automotive vehicle, the brake device may be constructed such that the wheel-cylinder pressure is built up by driving an ABS pump incorporated in a hydraulic control unit.

The present invention can be applied to a brake device with an electric booster configured to magnify a driver's brake operating force by utilizing electric power, but the construction of the electric booster is not limited to the particular embodiments shown. In particular, in the case of a construction equipped with return spring 59 that forces primary piston 2b in the direction for releasing of brake pedal BP, a startup-period inertia load of electric booster 5 tends to become great. Thus, by applying the present inventive concept to such a construction equipped with a return spring, remarkable effects can be realized.

In the first embodiment, it is exemplified that the brake device is configured such that drive motor 50 is controlled depending on a brake-pedal manipulated variable. In lieu thereof, a driver's brake-pedal leg power (depressing force) is detected. The brake device may be constructed such that drive motor 50 is controlled depending on the detected leg power.

Utilizing the fact that master-cylinder pressure Pmc varies depending on a stoke of primary piton 2b, a state where primary piston 2b starts to be spaced apart from the movable member 58 may be estimated based on a sensor signal from a master-cylinder pressure sensor (or fluid-pressure sensors 13, 23). Furthermore, a reaction sensor may be provided to directly detect a reaction force (a load), applied from primary piston 2b to electric booster 5 during a startup period of electric booster 5. That is, a state where primary piston 2b starts to be spaced apart from the movable member 58 may be detected based on the reaction-sensor output.

## BRIEF DESCRIPTION OF THE REFERENCE SIGNS

| | |
|---|---|
| BP | brake pedal |
| 2b | primary piston |
| 4a-4d | wheel cylinders |
| 5 | electric booster (master-cylinder pressure control mechanism) |

| 6 | input rod |
| 7 | brake manipulated variable detection device |
| 58 | movable member |
| 60 | battery (main electric power source) |
| 61 | DLC (back-up electric power source) |

**Claims**

1. A brake device comprising:

    an input rod displaced in an axial direction responsively to a driver's brake-pedal operation;
    a piston for pressurizing a fluid pressure in a master cylinder responsively to a displacement of the input rod;
    an input-rod displacement detection device for detecting the displacement of the input rod;
    a movable member for pushing the piston in a direction for pressurizing of the fluid pressure;
    a biasing member for biasing the piston in a direction for reducing of the fluid pressure;
    an electric booster for pushing the movable member against a biasing force of the biasing member and for assisting a movement of the piston in the direction for pressurizing of the fluid pressure;
    an assisting force device for producing an assisting force that pushes the piston in the direction for pressurizing of the fluid pressure against the biasing force of the biasing member upon detecting by the input-rod displacement detection device that the input rod has been displaced a predetermined displacement; and
    an electric-booster controller for starting up the electric booster after the assisting force has been produced by the assisting force device.

2. The brake device as claimed in claim 1, wherein:

    the predetermined displacement is set to a distance in a straight line from an initial position of the input rod to a certain position at which the input rod has been displaced when the piston starts to be spaced apart from the movable member.

3. The brake device as claimed in claim 2, which further comprises:

    a main electric power source for supplying an electric power to the electric booster; and
    a back-up electric power source for supplying an electric power to the electric booster in the presence of a failure of the main electric power source,
    wherein the electric-booster controller is configured to start up the electric booster by means of the back-up electric power source, upon detecting that the input rod has been displaced the predetermined displacement.

4. The brake device as claimed in claim 1, wherein:

    the electric-booster controller comprises a required deceleration rate calculation section for calculating a driver's required deceleration rate, and a braking-force compensation section for compensating for a deficiency between the driver's required deceleration rate calculated by the required deceleration rate calculation section and a deceleration rate produced by the driver's brake-pedal operation by a braking force produced by another braking function during a time interval from a starting point of the driver's brake-pedal operation to a point of time when the electric booster starts to operate.

5. The brake device as claimed in claim 4, wherein:

    the electric-booster controller further comprises an operation speed detector for detecting an operation speed of the brake pedal; and
    the braking-force compensation section is configured to increase a responsiveness of a compensation braking force of another braking function, as the operation speed, detected by the operation speed detector, increases.

6. The brake device as claimed in claim 2, wherein:

    the assisting force device is configured to apply the assisting force to the piston with at least an axial stroke of the input rod to the predetermined displacement, utilizing the input rod, which is displaced in the axial direction responsively to the driver's brake-pedal operation.

7. The brake device as claimed in claim 1, wherein:

the assisting force device is configured to hydraulically apply the assisting force to the piston by a working-fluid pressure.

8. A method of controlling a brake device including an input rod displaced in an axial direction responsively to a driver's brake-pedal operation, a piston for pressurizing a fluid pressure in a master cylinder responsively to a displacement of the input rod, an input-rod displacement detection device for detecting the displacement of the input rod, a movable member for pushing the piston in a direction for pressurizing of the fluid pressure, a biasing member for biasing the piston in a direction for reducing of the fluid pressure, and an electric booster for pushing the movable member against a biasing force of the biasing member and for assisting a movement of the piston in the direction for pressurizing of the fluid pressure, the method comprising:

producing an assisting force that pushes the piston in the direction for pressurizing of the fluid pressure against the biasing force of the biasing member, upon detecting by the input-rod displacement detection device that the input rod has been displaced a predetermined displacement; and

starting up the electric booster after the assisting force has been produced.

9. A brake device equipped with a piston, which is biased in a direction for reducing of a brake fluid pressure in a master cylinder and configured to move in a direction for pressurizing of the fluid pressure responsively to a driver's brake-pedal operation, and an electric booster for assisting a movement of the piston in the direction for pressurizing of the fluid pressure, comprising:

an assisting force device provided for producing an assisting force that pushes the piston in the direction for pressurizing of the fluid pressure prior to a startup of the electric booster.

# FIG.1

EP 2 371 643 A1

# FIG.2

```
                          START

                                              S1
    NO                BATTERY FAILED?

                        YES                   S2

              STOP SERVO-ASSISTANCE FUNCTION

                                              S3

              READ INPUT-ROD DISPLACEMENT xIR

                                              S4
    YES                 xIR ≥ x1?

                         NO                   S6

              • READ CURRENT DECELERATION RATE
              • CALCULATE DRIVER'S REQUIRED
                DECELERATION RATE

                                              S7

              CALCULATE DESIRED DECELERATION RATE
                 FOR ANOTHER BRAKING FUNCTION

                                              S8
         HIGHER RESPONSIVENESS REQUIRED?    NO

                        YES                   S9

              CALCULATE TIME RATE OF CHANGE ΔxIR
                 OF INPUT-ROD DISPLACEMENT xIR

          S5                          S10            S11
  INITIATE SERVO-    • CORRECT DESIRED DECELERATION RATE   OPERATE ANOTHER
  ASSISTANCE         • OPERATE ANOTHER BRAKING FUNCTION    BRAKING FUNCTION
  ACTION               RESPONSIVELY TO THE CORRECTED       RESPONSIVELY TO
                       DESIRED DECELERATION RATE           THE NON-CORRECTED
                                                           DESIRED DECELERATION
                                                           RATE

                          RETURN
```

# FIG.3

# FIG.4

DECELERATION RATE

DRIVER'S REQUIRED
DECELERATION RATE

DESIRED DECELERATION RATE
FOR ANOTHER BRAKING
FUNCTION

DECELERATION RATE IN STOPPED STATE
OF SERVO-ASSISTANCE FUNCTION

INPUT-ROD DISPLACEMENT xIR

# FIG.5

DESIRED-DECELERATION-RATE
CORRECTION FACTOR

TIME RATE OF CHANGE ΔxIR
OF INPUT-ROD DISPLACEMENT

# FIG.6A

DRIVER'S
BRAKE-PEDAL
OPERATION

THE FIRST    THE SECOND    THE FIRST

TIME

# FIG.6B

ELECTRIC CURRENT
CONSUMED

TIME

# FIG.6C

TERMINAL VOLTAGE

MINIMUM
OPERATING
VOLTAGE

TIME

# FIG.7A

DRIVER'S
BRAKE-PEDAL
OPERATION

THE FIRST    THE SECOND    THE FIRST

TIME

# FIG.7B

ELECTRIC CURRENT
CONSUMED

TIME

# FIG.7C

TERMINAL VOLTAGE

MINIMUM
OPERATING
VOLTAGE

TIME

# FIG.8A

DRIVER'S
BRAKE-PEDAL
OPERATION

THE FIRST    THE SECOND    THE FIRST

TIME

# FIG.8B

ELECTRIC CURRENT
CONSUMED

WITHOUT INRUSH CURRENT
SUPPRESSION CONTROL

1ST EMBODIMENT
(WITH INRUSH CURRENT
SUPPRESSION CONTROL)

TIME

# FIG.8C

TERMINAL VOLTAGE

MINIMUM
OPERATING
VOLTAGE

TIME

# FIG.9

EP 2 371 643 A1

# FIG.10

START

S20

ACCUMULATED QUANTITY
≤ PREDETERMINED VALUE? —NO→

↓ YES

S21

CLOSE PRESSURE-INTENSIFIER VALVE

S22

OPERATE PUMP MOTOR

S23

THE PRESENCE OF BRAKING
ACTION? —NO→

↓ YES

S24

CLOSE PRESSURE-REDUCTION VALVE

S25

OPEN PRESSURE-INTENSIFIER VALVE

(OCCURRENCE OF
ASSISTING FORCE)

S26

OPERATE BOOSTER DRIVE MOTOR

S27

CLOSE PRESSURE-INTENSIFIER VALVE

S28

OPEN PRESSURE-REDUCTION VALVE

(NO OCCURRENCE OF
ASSISTING FORCE)

RETURN

# FIG.11

EP 2 371 643 A1

# FIG.12

START

S30
BRAKING ACTION STARTED? — NO

YES

S31
CLOSE PRESSURE-REDUCTION VALVE

S32
OPEN PRESSURE-INTENSIFIER VALVE

(OCCURRENCE OF ASSISTING FORCE)

S33
OPERATE BOOSTER DRIVE MOTOR

S34
PRESSURE-REDUCTION FOR WHEEL-CYLINDER PRESSURE Pw STARTED? — NO

YES

S35
$P_{ACC} < P_w$? — NO

YES

S36
CALCULATE DESIRED FLUID PRESSURE P0 FOR WHEEL CYLINDER PRESSURE Pw HAVING BEEN PRESSURE-REDUCED

S37
CLOSE PRESSURE-INTENSIFIER VALVE

S38
OPEN PRESSURE-ACCUMULATION VALVE

S39
$P_{ACC} \geq P_w$? — NO

YES

S40
P0 = Pw? — NO

YES

S41
CLOSE PRESSURE-ACCUMULATION VALVE

RETURN          RETURN

27

| INTERNATIONAL SEARCH REPORT | | International application No. |
|---|---|---|
| | | PCT/JP2009/065659 |

**A.    CLASSIFICATION OF SUBJECT MATTER**
*B60T13/74(2006.01)i*

According to International Patent Classification (IPC) or to both national classification and IPC

**B.    FIELDS SEARCHED**

Minimum documentation searched (classification system followed by classification symbols)
B60T13/74

Documentation searched other than minimum documentation to the extent that such documents are included in the fields searched
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2007-112426 A  (Hitachi, Ltd.),<br>10 May 2007 (10.05.2007),<br>paragraphs [0012] to [0025]; fig. 1<br>& US 2009/0115242 A     & WO 2007/034961 A1<br>& CN 101287633 A | 1-3,6,8 |
| X<br>Y | JP 2002-331925 A  (Toyota Motor Corp.),<br>19 November 2002 (19.11.2002),<br>paragraphs [0028] to [0030]; fig. 1, 4<br>(Family: none) | 9<br>1-3,6,8 |
| Y | JP 2000-16258 A  (Toyota Motor Corp.),<br>18 January 2000 (18.01.2000),<br>paragraph [0007]<br>(Family: none) | 3 |

☐  Further documents are listed in the continuation of Box C.        ☐  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 December, 2009 (07.12.09) | 22 December, 2009 (22.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**EP 2 371 643 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007112426 A